# DEMANDE DE BREVET EUROPEEN

(11) **EP 1 249 377 A2**
(43) Date de publication de la demande: **16.10.2002**
(21) Numéro de dépôt: 02290667.1
(22) Date de dépôt: 18.03.2002
(51) Int. Cl.: B60T 13/567

(54) **Système et procédé de montage d'un tube dans un élément de raccordement, et enveloppe pour servomoteur comportant un tel système**

(30) Priorité: 09.04.2001 US 829428
(71) Demandeur: Delphi Technologies, Inc., Troy, MI 48007 (US)
(72) Inventeur: Castel, Philippe, 75005 Paris (FR); Fanelli, William, Dayton, Ohio 45459 (US); Vermoesen, Michael, Pittsfield, MA 01201 (US); Lordier, Daniel, 95170 Deuil la Barre (US)
(74) Mandataire: Abello, Michel

(57) **Abrégé**

La présente invention concerne un système et un procédé de montage d'un tube dans un élément de raccordement, et une enveloppe pour un servomoteur d'assistance de freinage dans un dispositif de commande de freinage, comportant un tel système. Le système de montage d'un tube (10) sur un élément de raccordement femelle (11) comprenant un perçage longitudinal (14) muni d'un épaulement transversal (14a), système dans lequel une portion d'extrémité (18) creuse du tube est insérée dans ledit perçage en butée contre son épaulement, se caractérise en ce que la paroi longitudinale de ladite portion d'extrémité comprend une zone déformée (23) en compression entre ledit épaulement et le reste du tube et transversalement déformée entre la paroi interne du perçage pour assurer la liaison mécanique ainsi que l'étanchéité entre le tube et l'élément de raccordement.

## Description

La présente invention concerne un système de montage d'un tube dans un élément de raccordement, un procédé de montage d'un tube dans un élément de raccordement et une enveloppe pour un servomoteur d'assistance de freinage dans un dispositif de commande de freinage, comportant un tel système.

Les dispositifs de freinage dans les véhicules automobiles comprennent classiquement un servomoteur d'assistance permettant de générer une pression de commande dans un maître-cylindre sans faire supporter la totalité de l'effort nécessaire de poussée à un opérateur actionnant la pédale de frein. Le servomoteur comprend une boîte ou enveloppe rigide séparée de façon étanche en deux chambres par une cloison mobile, ladite cloison étant solidaire d'un piston composite placé entre le maître-cylindre et une tige de commande raccordée à la pédale de frein et commandant l'ouverture d'un clapet pour faire varier la pression dans les chambres. L'enveloppe du servomoteur, généralement formée d'un carter avant et d'un carter arrière, est assemblée de manière étanche au maître-cylindre et l'ensemble étant assemblé par ladite enveloppe à une paroi verticale du véhicule automobile.

Lorsque l'opérateur actionne la pédale de frein, l'enveloppe est soumise à de fortes pressions ainsi qu'à une force de réaction importante, proportionnelle à la force obtenue à la sortie du maître-cylindre. Pour éviter que l'enveloppe se déforme ou se décolle de la paroi verticale du véhicule, une première technologie consiste à utiliser des enveloppes constituées de tôle épaisse. Une seconde technologie consiste à munir l'enveloppe de tirants ou éléments de renfort, assemblés par leurs extrémités aux fonds des carters avant et arrière qui sont en vis-à-vis au moyen de pièces de raccordement. Chaque élément de renfort peut être constitué d'un tube plein ou creux. Dans ce dernier cas, l'assemblage du maître-cylindre et de l'enveloppe peut être effectué par l'intermédiaire de vis de fixation passant dans les tubes creux. L'une des extrémités du tube comprend par exemple un filet et est vissée sur une pièce de fixation dite arrière sertie autour d'un trou de fixation du carter arrière. L'autre extrémité du tube est insérée dans un perçage d'une pièce de fixation dite avant, également sertie autour d'un trou de fixation du carter avant, ladite extrémité étant en butée contre un épaulement dudit perçage.

Pour assurer l'assemblage et l'étanchéité entre le tube et la pièce de fixation avant, le brevet US 5 487 327 propose, tel qu'illustré schématiquement à la figure 1A, de sertir simultanément la pièce de fixation 200 sur le carter avant 201 et le tube 202 sur la pièce de fixation en prévoyant un moletage 202a sur l'extrémité du tube insérée dans le perçage 204 muni d'un épaulement 205. Dans une variante de réalisation, le sertissage du tube est obtenu ou complété par le matage d'une collerette de la pièce de raccordement dans une gorge annulaire présente sur la surface externe du tube. Ce système de montage implique une opération de sertissage mettant en jeu des forces importantes qui nécessite des tubes solides. Par ailleurs, cette opération de sertissage doit être effectuée de manière très précise pour éviter d'endommager le tube.

En référence à la figure 1B, la demande internationale WO 99/41122, décrit un autre système de montage dans lequel l'étanchéité entre le tube 206 et l'élément de fixation 207 est obtenue par la présence d'un anneau torique 208 d'étanchéité placé dans une gorge annulaire 209 du perçage 210. Ce système de montage nécessite la présence d'une pièce supplémentaire.

Le but de la présente invention est de proposer une alternative aux deux systèmes de montage décrits ci-dessus, qui soit aisée à réaliser.

L'invention propose un système de montage d'un tube sur un élément de raccordement femelle comprenant un perçage longitudinal muni d'un épaulement transversal, système dans lequel une portion d'extrémité creuse du tube est insérée dans ledit perçage en butée contre son épaulement, caractérisé en ce que la paroi longitudinale de ladite portion d'extrémité comprend une zone déformée en compression entre ledit épaulement et le reste du tube et transversalement déformée entre la paroi interne du perçage pour assurer la liaison mécanique ainsi que l'étanchéité entre le tube et l'élément de raccordement.

Selon une particularité, la paroi longitudinale de la portion d'extrémité comprend une zone d'épaisseur réduite.

Avantageusement, la paroi longitudinale d'épaisseur réduite s'étend de l'extrémité libre de la portion d'extrémité jusqu'à un épaulement transversal présent à l'intérieur du tube.

Selon une autre particularité, le perçage est traversant et comporte deux tronçons cylindriques séparés par son épaulement, un premier tronçon ayant une petite section inférieure à la section externe du tube et un deuxième tronçon ayant une grande section sensiblement égale ou supérieure à la section externe du tube, de façon que la portion d'extrémité creuse du tube soit insérée dans le deuxième tronçon.

Avantageusement, le tube est creux sur toute sa longueur.

Selon une autre particularité, le deuxième tronçon a une longueur supérieure à celle de ladite portion d'extrémité, de façon que la zone déformée de la portion d'extrémité soit plus proche de l'épaulement du perçage que de l'extrémité libre du deuxième tronçon.

Selon une variante de réalisation, le deuxième tronçon présente au voisinage de son épaulement une gorge annulaire s'étendant transversalement vers l'extérieur pour recevoir au moins partiellement la zone déformée.

Selon une autre variante, la paroi longitudinale du deuxième tronçon du perçage comporte un moletage au moins au niveau de la zone déformée du tube.

Un autre but de la présente invention est de proposer un procédé de montage d'un tube sur un élément de raccordement femelle.

Le procédé de montage d'un tube sur un élément de raccordement femelle comprenant un perçage muni d'un épaulement, se caractérise en ce qu'il comprend :
- l'introduction dans ledit perçage d'une portion d'extrémité du tube, ledit tube étant creux sur ladite portion d'extrémité, ladite portion d'extrémité creuse formant ou comprenant une zone d'affaiblissement présentant une résistance à la compression inférieure au reste du tube, jusqu'à ce que l'extrémité libre de la portion d'extrémité vienne en butée contre ledit épaulement, et
- l'application d'une force de compression sur le tube, sensiblement selon l'axe du perçage, supérieure à la résistance à la compression de ladite zone d'affaiblissement, de manière à déformer celle-ci transversalement vers l'extérieur et à former une zone déformée assurant la liaison mécanique et l'étanchéité entre le tube et l'élément de raccordement.

Selon une particularité, le procédé comprend l'introduction dans ledit perçage d'une portion d'extrémité du tube dont la zone d'affaiblissement est constituée par une zone amincie d'épaisseur réduite par rapport au reste du tube, formée par une réduction de l'épaisseur à l'intérieur de la portion d'extrémité.

Selon une autre particularité, la zone amincie s'étend sur une longueur déterminée à partir de l'extrémité libre de la portion d'extrémité.

Selon une variante, le procédé consiste à appliquer une force de compression jusqu'à ce que la zone d'affaiblissement se déforme et soit refoulée au moins partiellement dans une gorge annulaire du perçage s'étendant transversalement au voisinage de l'épaulement.

Un autre but de la présente invention est de proposer une enveloppe hermétique pour un servomoteur d'assistance de freinage comportant un tel système.

L'enveloppe hermétique selon l'invention comportant deux carters, des éléments de renfort formés de tubes assemblés par leurs extrémités, au moyen d'éléments de raccordement, à des parois opposées des carters, se caractérise en ce que les tubes sont assemblés sur des éléments de raccordement selon le système de montage défini précédemment.

Avantageusement, l'enveloppe hermétique comprend des tiges de liaison insérées à travers les éléments de raccordement et les tubes et destinées à permettre l'assemblage du dispositif de freinage sur une paroi du véhicule auquel le dispositif de freinage est destiné.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence au dessin schématique annexé.

Sur ce dessin :
- les figures 1A et 1B représentent des vues en coupe partielles illustrant schématiquement deux modes de réalisation d'un système d'attache d'un tube sur une pièce de raccordement selon l'art antérieur;
- la figure 2 représente de manière schématique une vue en coupe partielle d'un dispositif de freinage comprenant un servomoteur qui inclut un système de montage selon l'invention ;
- la figure 3 représente une vue en coupe partielle illustrant l'étape d'introduction d'un tube dans un élément de raccord pour l'obtention d'un système de montage selon l'invention ;
- la figure 4 représente une vue en coupe partielle d'un système de montage d'un tube dans un élément de raccord selon l'invention ;
- la figure 5 représente une vue en coupe partielle d'un système de montage selon une variante de réalisation.

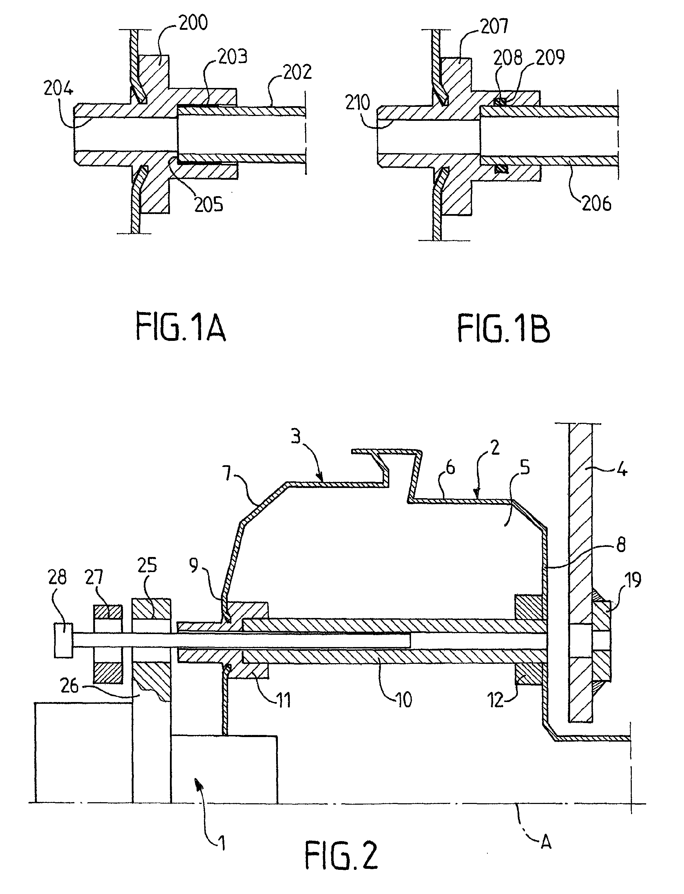

Dans la description qui suit, le système de montage selon l'invention est appliqué à un servomoteur d'assistance d'un dispositif de freinage pneumatique ou à dépression. Suivant la figure 2, le dispositif de freinage comprend un maître-cylindre 1 et un servomoteur 2 associé à une valve de contrôle (non représentée). Le servomoteur comprend une enveloppe 3 sensiblement symétrique par rapport à l'axe principal A du maître cylindre 1, ledit axe étant par exemple disposé sensiblement horizontalement, tel que représenté sur la figure 2, lorsque le dispositif est fixé à une paroi verticale du véhicule automobile. De manière connue, le servomoteur comprend une cloison mobile (non représentée) séparant le volume intérieur 5 de l'enveloppe en deux chambres.

L'enveloppe est formée de deux carters, un carter dit arrière 6 par lequel l'enveloppe est fixée à ladite paroi verticale 4 et un carter dit avant 7, les deux carters étant assemblés de manière étanche. Les carters comprennent chacun une paroi de fond 8, 9 disposée sensiblement perpendiculairement à l'axe A. Des éléments de renfort formés par des tubes creux 10 s'étendant dans l'espace interne 5 sont assemblés par leurs extrémités aux parois de fond 8, 9. L'enveloppe comprend par exemple deux tubes creux 10 disposés symétriquement par rapport à l'axe A et parallèlement à celui-ci. Bien entendu, les tubes creux traversent de manière étanche la cloison mobile (non représentée). L'assemblage de chaque tube s'effectue par l'intermédiaire d'un élément de raccordement avant 11 et d'un élément de raccordement arrière 12, qui sont respectivement assemblés de manière étanche à la paroi de fond avant 9 et la paroi de fond arrière 8. L'assemblage entre un tube et un élément de raccordement avant, représenté schématiquement sur la figure 2, est basé sur l'insertion d'une portion d'extrémité du tube dans un perçage traversant de l'élément de raccordement muni d'un épaulement.

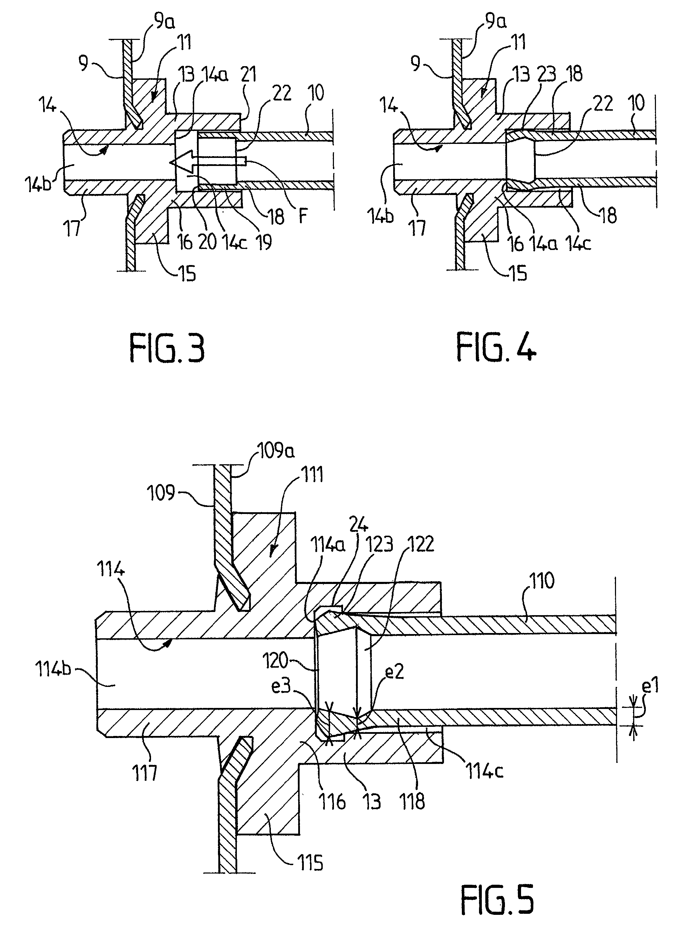

Cet assemblage va à présent être décrit plus en détail en référence aux figures 3 et 4. L'élément de raccordement avant 11 est serti hermétiquement autour d'un trou traversant de la paroi de fond 9 du carter avant. Il est formé d'un corps cylindrique 13 comprenant un perçage coaxial 14, traversant ledit corps de part en part, et une collerette radiale 15 venant contre la surface interne 9a de la paroi de fond 9 lorsqu'il est serti sur la paroi de fond, de sorte que le corps cylindrique comprend une partie arrière 16 restant à l'intérieur de l'enveloppe 3 et une partie avant externe 17 disposée à l'extérieur de l'enveloppe. Le sertissage est réalisé par le rabattement de matière de la partie externe du cylindre contre la surface externe de la paroi. Le diamètre externe de la partie arrière peut être supérieur à celui de la partie avant. Tel qu'illustré à la figure 2, l'élément de raccordement peut également être formé d'un corps cylindrique comprenant un épaulement transversal externe définissant la partie arrière et la partie avant, ledit épaulement venant contre la surface interne de la paroi de fond lors du sertissage. Le perçage 14 comprend un épaulement transversal 14a orienté vers l'intérieur de l'enveloppe et disposé sensiblement perpendiculairement à l'axe du perçage. Cet épaulement définit deux tronçons cylindriques, un premier tronçon 14b débouchant à l'extérieur de l'enveloppe et ayant une petite section inférieure à la section externe du tube, et un deuxième tronçon 14c destiné à recevoir la portion d'extrémité du tube, débouchant à l'intérieur de l'enveloppe et ayant une grande section sensiblement égale ou supérieure à la section externe du tube.

Suivant la figure 3, l'assemblage est obtenu au moyen d'un tube 10 qui présente une épaisseur réduite au niveau de sa portion d'extrémité 18 destinée à être insérée dans la deuxième portion du perçage, définissant une zone amincie 19. Cette zone amincie est obtenue par une réduction d'épaisseur ou amincissement à l'intérieur du tube, de sorte que le diamètre externe du tube 10 demeure sensiblement constant sur toute sa longueur. La paroi interne du tube présente donc un épaulement transversal 22 qui délimite la zone amincie 19 du reste du tube, ledit épaulement étant sensiblement perpendiculaire à l'axe du tube. La zone amincie 19 s'étend à partir du bord longitudinal ou extrémité libre 20 de la portion d'extrémité du tube sur une longueur déterminée, qui est inférieure à la longueur du deuxième tronçon du perçage qui correspond à la distance entre l'épaulement 14a et l'extrémité libre 21 dudit tronçon. Cette zone amincie 19, qui constitue une zone d'affaiblissement, présente une résistance à la compression inférieure à celle du reste du tube. La portion d'extrémité 18 du tube est insérée dans le deuxième tronçon 14c du perçage 14, tel qu'illustré par la flèche référencée F, et une force de compression est exercée sur le tube, de préférence sensiblement selon l'axe du perçage. Cette force de compression peut être exercée dès le début de l'insertion du tube dans le perçage ou uniquement une fois que le tube est en butée contre l'épaulement. Elle est supérieure à la résistance en compression de la zone amincie et inférieure à celle du reste du tube. Lorsque la portion d'extrémité 18 vient par son extrémité libre 20 en butée contre l'épaulement, la zone amincie se déforme transversalement vers l'extérieur sous l'effet de la force de compression pour former une zone déformée 23 (figure 4). La zone déformée 23 procure une force de rétention entre le tube 10 et l'élément de raccordement avant 11 et assure également l'étanchéité entre ces deux éléments. La force de rétention entre le tube et l'élément de raccordement doit être suffisante pour permettre la manipulation de l'ensemble lors de l'assemblage de l'enveloppe. Elle permet de résister à des efforts de traction supérieurs à 1500 N.

La zone amincie 19 présente une épaisseur inférieure à l'épaisseur du reste du tube, par exemple une épaisseur correspondant à 30 à 50% de l'épaisseur du reste du tube. A titre d'exemple, pour un tube de l'ordre de 2 millimètres d'épaisseur nominale et ayant un diamètre interne compris entre 8,8 et 9,2 millimètres, le tube comporte une zone amincie de 0,8 millimètre d'épaisseur. Suivant l'épaisseur du tube et la nature du tube, par exemple métallique, la force de compression appliquée sur le tube pour effectuer le montage est comprise entre 17000 et 23000 N.

Suivant la figure 2, l'assemblage de l'autre extrémité du tube 10 sur le carter arrière 6 peut s'effectuer par l'intermédiaire d'une pièce de raccordement arrière constituée par un écrou 12, serti de manière étanche contre la surface interne de la paroi de fond 8 du carter arrière, autour d'un trou traversant de ladite paroi de fond. L'extrémité du tube présente un filet et est vissée dans l'écrou 12. L'étanchéité de cet assemblage peut être assurée de manière connue par une colle d'étanchéité. A titre d'exemple, l'extrémité filetée du tube est recouverte de microcapsules non collantes renfermant une colle qui est libérée lors de l'étape de vissage et qui sèche en 2-3 heures.

L'assemblage du maître-cylindre 1 et du servomoteur 2 est obtenu en insérant les parties avant externes 17 des éléments de raccordement dans des trous 25 d'une bride 26 de fixation du maître-cylindre 2 et en vissant par la suite des écrous 27 sur ces parties avant qui sont filetées. Dans le cas de tubes creux 10, l'assemblage du dispositif de freinage peut être réalisé par des tiges de liaison 28 constituées par exemple par des vis, passant par les perçages 14 des éléments de raccordement avant et les tubes creux, et vissées à la paroi verticale 4 du véhicule, par exemple dans des écrous 29 soudés à cette paroi verticale 4.

Dans une variante de réalisation, le deuxième tronçon du perçage de l'élément de raccordement avant comprend un moletage contre lequel la zone amincie du tube vient se déformer. Ce moletage permet d'obtenir une meilleure force de rétention entre le tube et l'élément de raccordement.

La figure 5 illustre une autre variante de réalisation permettant également d'améliorer la force de rétention entre le tube et l'élément de raccordement avant. Sur cette figure 5, les références des figures 3 et 4 augmentées d'une centaine ont été utilisées pour désigner les éléments similaires. Le perçage 114 comprend une gorge annulaire transversale 24 formée dans le prolongement de l'épaulement 114a et la zone déformée 123 transversalement vers l'extérieur de la portion d'extrémité 118 du tube 110 est positionnée partiellement dans ladite gorge 24. Ce système de montage est obtenu à partir d'un tube sensiblement identique à celui décrit précédemment en référence à la figure 3. La portion d'extrémité 118 du tube comprend une zone amincie, d'épaisseur e2 inférieure à l'épaisseur e1 du reste du tube, délimitée par un épaulement interne 122, qui est par exemple incliné par rapport à l'axe du tube. Sous une force de compression, ladite zone amincie se déforme transversalement pour former une zone déformée d'épaisseur e3 supérieure à l'épaisseur e1 du tube, disposée partiellement dans la gorge, qui assure la liaison mécanique et l'étanchéité entre le tube et l'élément de raccordement. La gorge permet d'obtenir une meilleure force de rétention entre les deux éléments et favorise également le refoulement de matière transversalement vers l'extérieur, à l'intérieur de la gorge, pour éviter que la zone déformée constitue un obstacle à l'insertion de la vis de fixation à travers l'élément de raccordement.

Bien que l'invention ait été décrite en liaison avec un mode de réalisation particulier et deux variantes, il est bien évident qu'elle n'y est nullement limitée et qu'elle comprend tous les équivalents techniques des moyens décrits ainsi que leurs combinaisons si celles-ci entrent dans le cadre de l'invention.

A titre d'exemple, la zone d'affaiblissement de la portion d'extrémité peut être constituée non pas par un amincissement de l'épaisseur du tube mais par une zone où le matériau constituant le tube présente une résistance moindre, obtenue par un recuit ou un écrouissage. La zone d'affaiblissement peut, par ailleurs, s'étendre non pas jusqu'à l'extrémité libre de la portion d'extrémité du tube venant en butée contre l'épaulement, mais sur une partie de la portion d'extrémité en amont de ladite extrémité libre. Par ailleurs, le tube peut être creux uniquement au niveau de sa portion d'extrémité destinée à être insérée dans le perçage, cette portion d'extrémité creuse pouvant constituer la zone d'affaiblissement. Lorsque le tube n'est pas creux sur toute sa longueur, l'élément de raccordement peut comprendre un perçage longitudinal borgne, l'épaulement précité du perçage étant alors constitué par le fond du perçage.

## Revendications

1. Système de montage d'un tube (10, 110) sur un élément de raccordement femelle (11, 111) comprenant un perçage longitudinal (14, 114) muni d'un épaulement transversal (14a, 114a), système dans lequel une portion d'extrémité (18, 118) creuse du tube est insérée dans ledit perçage en butée contre son épaulement, **caractérisé en ce que** la paroi longitudinale de ladite portion d'extrémité comprend une zone déformée (23, 123) en compression entre ledit épaulement et le reste du tube et transversalement déformée entre la paroi interne du perçage pour assurer la liaison mécanique ainsi que l'étanchéité entre le tube et l'élément de raccordement.

2. Système de montage selon la revendication 1, **caractérisé en ce que** la paroi longitudinale de la portion d'extrémité (18, 118) comprend une zone d'épaisseur réduite.

3. Système de montage selon la revendication 2, **caractérisé en ce que** la paroi longitudinale d'épaisseur réduite s'étend de l'extrémité libre (20, 120) de la portion d'extrémité (18, 118) jusqu'à un épaulement transversal (22, 122) présent à l'intérieur du tube.

4. Système de montage selon la revendication 2 ou 3, **caractérisé en ce que** le perçage (14, 114) est traversant et comporte deux tronçons cylindriques séparés par son épaulement, un premier tronçon (14b, 114b) ayant une petite section inférieure à la section externe du tube (10, 110) et un deuxième tronçon (14c, 114c) ayant une grande section sensiblement égale ou supérieure à la section externe du tube, de façon que la portion d'extrémité creuse du tube soit insérée dans le deuxième tronçon.

5. Système de montage selon la revendication 4, **caractérisé en ce que** le tube (10, 110) est creux sur toute sa longueur.

6. Système de montage selon la revendication 4 ou 5, **caractérisé en ce que** le deuxième tronçon (14c, 114c) a une longueur supérieure à celle de ladite portion d'extrémité, de façon que la zone déformée (23, 123) de la portion d'extrémité soit plus proche de l'épaulement (14a, 114a) du perçage que de l'extrémité libre du deuxième tronçon (14c, 114c).

7. Système de montage selon l'une des revendications 4 à 6, **caractérisé en ce que** le deuxième tronçon (114c) présente au voisinage de l'épaulement une gorge annulaire (24) s'étendant transversalement vers l'extérieur pour recevoir au moins partiellement la zone déformée (123).

8. Système de montage selon l'une des revendications 4 à 7, **caractérisé en ce que** la paroi longitudinale du deuxième tronçon du perçage (14) comporte un moletage au moins au niveau de la zone déformée (23) du tube.

9. Procédé de montage d'un tube (10, 110) sur un élément de raccordement femelle (11, 111) comprenant un perçage (14, 114) muni d'un épaulement (14a, 114a) **caractérisé en ce qu'**il comprend :
- l'introduction dans ledit perçage d'une portion d'extrémité (18, 118) du tube, ledit tube étant creux sur ladite portion d'extrémité, ladite portion d'extrémité creuse formant ou comprenant une zone d'affaiblissement (19) présentant une résistance à la compression inférieure au reste du tube, jusqu'à ce que l'extrémité libre (20) de la portion d'extrémité vienne en butée contre ledit épaulement, et
- l'application d'une force de compression sur le tube, sensiblement selon l'axe du perçage, supérieure à la résistance à la compression de ladite zone d'affaiblissement, de manière à déformer celle-ci transversalement vers l'extérieur et à former une zone déformée (23) assurant la liaison mécanique et l'étanchéité entre le tube et l'élément de raccordement.

10. Procédé de montage selon la revendication 9, **caractérisé en ce qu'**il comprend l'introduction dans ledit perçage (10) d'une portion d'extrémité (18) du tube dont la zone d'affaiblissement est constituée par une zone amincie (19) d'épaisseur réduite par rapport au reste du tube, formée par une réduction de l'épaisseur à l'intérieur de la portion d'extrémité.

11. Procédé de montage selon la revendication 9 ou 10, **caractérisé en ce que** la zone amincie (19) s'étend sur une longueur déterminée à partir de l'extrémité libre (20) de la portion d'extrémité.

12. Procédé de montage selon l'une des revendications 9 à 11, **caractérisé en ce qu'**il consiste à appliquer une force de compression jusqu'à ce que la zone d'affaiblissement (19) se déforme et soit refoulée au moins partiellement dans une gorge annulaire (24) du perçage s'étendant transversalement au voisinage de l'épaulement (114a).

13. Enveloppe hermétique (3) pour servomoteur d'assistance (2) d'un dispositif de freinage, ladite enveloppe hermétique comportant deux carters (6, 7), des éléments de renfort formés de tubes (10) assemblés par leurs extrémités, au moyen d'éléments de raccordement, à des parois (8, 9) opposées des carters, **caractérisée en ce que** les tubes (10) sont assemblés sur des éléments de raccordement (11) selon le système de montage défini dans l'une des revendications 1 à 8.

14. Enveloppe hermétique selon la revendication 13, **caractérisée en ce qu'**elle comprend des tiges de liaison (28) insérées à travers les éléments de raccordement et les tubes et destinées à permettre l'assemblage du dispositif de freinage sur une paroi (4) du véhicule auquel le dispositif de freinage est destiné.
